Europäisches Patentamt

European Patent Office

Office européen des brevets

(19)

(11) Numéro de publication: **0 169 153**
**A1**

## (12) DEMANDE DE BREVET EUROPEEN

(21) Numéro de dépôt: 85420121.7

(22) Date de dépôt: 02.07.85

(51) Int. Cl.⁴: **G 01 P 13/00**

(30) Priorité: 02.07.84 FR 8410652

(43) Date de publication de la demande: **22.01.86**
Bulletin 86/4

(84) Etats contractants désignés: **AT BE CH DE GB IT LI LU NL SE**

(71) Demandeur: **Boiteux, Jean-Pierre, Les Grands-Prés Sergy, F-01630 Saint Genis Pouilly (FR)**

(72) Inventeur: **Boiteux, Jean-Pierre, Les Grands-Prés Sergy, F-01630 Saint Genis Pouilly (FR)**

(74) Mandataire: **Maureau, Philippe et al, Cabinet Germain & Maureau Le Britannia - Tour C 20, bld Eugène Déruelle Boîte Postale 3011, F-69392 Lyon Cédex 03 (FR)**

(54) Détecteur de circulation d'un fluide.

(57) Ce dispositif est du type comprenant un circuit principal (2) de circulation du fluide, et un circuit secondaire (5) en dérivation à l'intérieur duquel est monté un flotteur (9) déplaçable dans la direction d'écoulement du fluide.

Selon l'invention, le flotteur (9) est monté libre en translation entre deux positions extrêmes stables correspondant, d'une part, à l'absence de circulation ou à une circulation insuffisante de fluide et, d'autre part, à un écoulement normal du fluide, un indicateur (13) étant prévu qui détecte la présence du flotteur (9) dans l'une de ses positions extrêmes.

Application à la détection de circulation d'un fluide à l'intérieur d'une machine.

1

## DETECTEUR DE CIRCULATION D'UN FLUIDE

La présente invention a pour objet un détecteur de circulation d'un fluide à l'intérieur d'une installation, ce fluide pouvant être liquide ou gazeux.

Il est nécessaire, dans de nombreuses installations industrielles, de surveiller la bonne circulation d'un fluide, par exemple d'un fluide de lubrification ou de refroidissement d'une machine indispensable au bon fonctionnement de celle-ci.

Cette détection doit être faite notamment dans le cas de moteurs, pompes, turbines et éléments chauffants à refroidir.

Il est important que le détecteur coupe immédiatement le fonctionnement de l'appareil dans lequel la circulation de fluide est surveillée, afin d'éviter la détérioration de cet appareil lorsque la circulation de fluide cesse ou est insuffisante.

Dans les dispositifs connus, un organe sensible à la circulation du fluide se trouve placé dans le circuit principal, ou déborde largement dans celui-ci. Cet organe sensible est constitué par une pièce réalisée de façon très précise, telle qu'une pièce conique ménageant un faible jeu entre sa surface périphérique et la paroi du conduit à l'intérieur duquel elle est montée.

Lorsque le fluide circule, l'organe détecteur occupe une position d'équilibre à l'intérieur du circuit. Cette solution présente l'inconvénient que l'organe détecteur étant monté à l'intérieur du circuit, il réduit la section de passage du fluide.

En outre, compte tenu de la faible différence de section entre l'intérieur du conduit et l'organe détecteur, cet organe forme un barrage au niveau duquel s'accumulent les impuretés contenues dans le fluide, ce qui peut se traduire à la longue par un coincement de l'organe détecteur en position de circulation du fluide, de telle sorte que plus aucune sécurité n'est assurée.

Le brevet allemand 1 252 299 concerne un appareil de détection de circulation d'un fluide comprenant un conduit principal sur lequel est monté en dérivation un conduit secondaire comprenant une cavité ménagée à l'intérieur d'un corps. A l'intérieur de cette cavité est monté coulissant un élément aimanté de forme annulaire, engagé sur une tubulure centrale contenant elle-même un élément coulissant et aimanté.

Lorsque le fluide circule dans les circuits, une différence de pression est créée à l'intérieur de la cavité dans laquelle est monté le flotteur annulaire, notamment en raison de la présence d'un Venturi dans le conduit principal. L'élément annulaire a tendance à se déplacer sous l'effet de cette différence de pression à l'encontre de l'action d'un aimant disposé à une extrémité de la cavité. L'élément annulaire trouve alors une position d'équilibre fonction de la différence de pression régnant de part et d'autre de lui à l'intérieur de la cavité. Lorsque l'élément annulaire dépasse une position prédéterminée, il libère, en raison du choix des polarités, l'élément situé à l'intérieur de la pièce tubulaire centrale, cet élément venant actionner mécaniquement un contact.

Il est à noter que l'élément annulaire mobile étant situé dans le circuit secondaire et occupant une position intermédiaire d'équilibre variable, le conduit secondaire n'est jamais obturé totalement, et les impuretés peuvent circuler dans ce dernier et coincer l'élément annulaire avec les conséquences fâcheuses indiquées précédemment. En outre, ce dispositif mettant en oeuvre plusieurs éléments aimantés, mobiles et de polarités différentes, est d'un fonctionnement peu fiable.

La présente invention vise à remédier à ces inconvénients.

A cet effet, le détecteur de circulation d'un fluide qu'elle concerne, du type comprenant un circuit principal de circulation du fluide, et un circuit secondaire en dérivation à l'intérieur duquel est monté un flotteur déplaçable dans la direction d'écoulement du fluide, est caractérisé en ce que le flotteur est monté libre en translation entre deux positions extrêmes stables correspondant, d'une part, à l'absence de circulation ou à une circulation insuffisante de fluide et, d'autre part, à un écoulement normal du fluide, un indicateur étant prévu qui détecte la présence du flotteur dans l'une de ses positions extrêmes.

Cette solution est très intéressante car le flotteur étant monté libre en translation, avec jeu entre deux positions stables, il n'y a pas de risques de coincement de celui-ci, que ce soit par grippage ou en raison de l'accumulation d'impuretés.

Le fait que le flotteur soit situé dans un circuit secondaire ne perturbe absolument pas l'écoulement du fluide dans le circuit principal, cet écoulement étant d'autant moins perturbé que, selon une forme avantageuse d'exécution, le flotteur obture totalement le circuit secondaire lorsqu'il est dans sa position stable correspondant à une circulation normale du fluide.

3

Compte tenu des caractéristiques de ce dispositif, il n'est pas nécessaire de créer une différence de pression artificielle entre deux points du circuit, le flotteur réagissant à de très faibles différences de pression et passant de l'une de ses positions stables à l'autre, sans trouver une position d'équilibre intermédiaire.

Conformément à une forme d'exécution de l'invention, le tronçon de circuit secondaire, à l'intérieur duquel le flotteur est déplaçable, est vertical et le flotteur passe de sa position stable en conditions normales de circulation du fluide à sa position stable en conditions de circulation insuffisante du fluide, sous l'effet de la gravité.

Selon une autre possibilité, le flotteur est déplaçable entre sa position stable en conditions normales de circulation du fluide et sa position stable en conditions de circulation insuffisante du fluide, sous l'action de moyens élastiques de rappel.

Ce second agencement permet de placer le détecteur dans n'importe quelle position, puisque le retour du flotteur en position stable de non circulation du fluide est assuré par les moyens élastiques, ces moyens étant avantageusement constitués par un ressort disposé en aval du flotteur dans le sens d'écoulement du fluide.

Conformément à une possibilité, l'indicateur de position du flotteur est constitué en combinaison par la nature même d'un matériau constitutif du flotteur, qui est aimanté et par un détecteur disposé à l'extérieur du circuit secondaire, réagissant aux variations de champ magnétique.

En fonction du type de montage envisagé, et du mode de traitement de l'information reçue par le détecteur, celui-ci peut être disposé en regard de l'un ou l'autre des emplacements correspondant aux deux positions stables du flotteur.

Afin de permettre le réglage du seuil de déclenchement du flotteur, le circuit principal est équipé d'un organe de réglage du débit de passage du fluide.

De toute façon, l'invention sera bien comprise à l'aide de la description qui suit, en référence au dessin schématique annexé représentant, à titre d'exemples non limitatifs, plusieurs formes d'exécution de ce dispositif :

Figure 1 est une vue en coupe d'un premier détecteur en condition de non circulation du fluide ;

4

Figure 2 est une vue en coupe d'un second détecteur en condition de circulation du fluide ;

Figures 3 et 4 sont deux vues en coupe longitudinale des deux flotteurs équipant les détecteurs des figures 1 et 2 respectivement ;

Figures 5 à 7 sont trois vues très schématiques correspondant à trois autres possibilités de montage de ce détecteur ;

Figure 8 est une vue du détail (A) de figure 7 ;

Figure 9 est une vue très schématique correspondant à une autre possibilité de montage de ce détecteur.

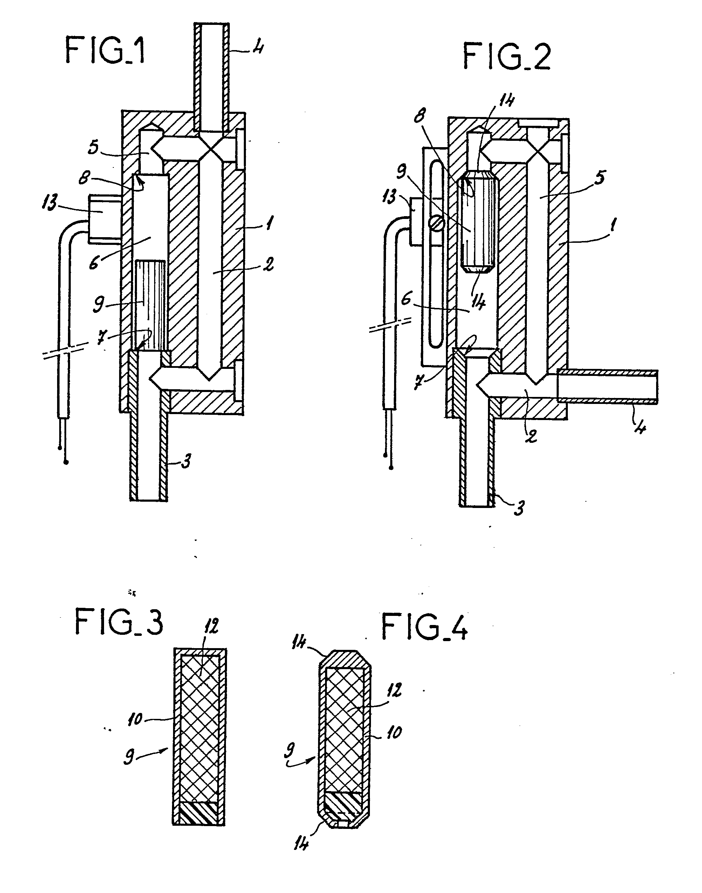

Le détecteur, représenté à la figure 1, comprend un corps (1) à l'intérieur duquel est ménagé un circuit principal de passage du fluide raccordé à des tubulures d'entrée et de sortie, respectivement (3) et (4). Il est à noter que les tubulures (3) et (4) sont disposées dans un même plan et sont parallèles l'une à l'autre.

Dans le circuit principal (2) débouche un circuit secondaire de dérivation (5), en forme générale de L, et d'orientation inverse de celle du circuit principal. A l'intérieur de ce circuit secondaire (5) est ménagée une chambre (6) de section élargie, et dont les extrémités amont (7) et aval (8) forment deux sièges. A l'intérieur de la chambre (6) est monté, avec un jeu important, un flotteur (9) cylindrique susceptible, selon sa position, de venir en appui contre les sièges (7) et (8) et d'assurer, au niveau de ceux-ci, la fermeture du circuit secondaire.

Comme montré à la figure 3, le flotteur (9) est constitué par une enveloppe (10) à l'intérieur de laquelle est disposé un matériau aimanté (12).

En regard de la position du flotteur (9) correspondant à son appui sur le siège (8), est disposé un indicateur (13) réagissant aux variations de champ magnétique. L'information fournie par l'indicateur (13) peut être traitée de façon à agir sur le fonctionnement de la machine dans laquelle circule le fluide traversant le détecteur.

En pratique, lorsque le fluide ne circule pas ou lorsque la circulation de fluide est inférieure à une valeur prédéterminée, le flotteur se trouve dans la position représentée à la figure 1, c'est-à-dire en appui contre le siège (7). Lorsque le fluide circule normalement, le flotteur (9) passe immédiatement dans son autre position d'équilibre, dans laquelle il vient en appui contre le siège (8) obturant ainsi le circuit secondaire et laissant la totalité du débit de fluide passer par le circuit principal (2).

Lorsque le flotteur est en appui contre le siège (8), il se trouve en regard de l'indicateur (13), de telle sorte que celui-ci reçoit une information lui indiquant une circulation normale de fluide.

Lorsque la circulation de fluide cesse ou devient insuffisante, le flotteur (9) revient immédiatement en appui contre le siège (7) sous le seul effet de la gravité, puisque la chambre (6) est disposée verticalement.

La figure 2 représente une variante de réalisation de ce détecteur dans laquelle les mêmes éléments sont désignés par les mêmes références que précédemment, les formes respectives des deux circuits principal et secondaire étant différentes, le circuit principal formant un simple L, tandis que le circuit secondaire forme un U.

Dans cette forme d'exécution, le flotteur (9) possède une forme légèrement différente puisque ses extrémités (14) sont tronconiques, coopérant avec des sièges (7) et (8) de forme complémentaire.

Il est également remarquable que, dans la forme d'exécution représentée à la figure 2, l'indicateur (13) est monté de façon réglable sur un rail (15), de façon à pouvoir, en fonction du type de détection souhaité, être placé indifféremment dans l'une ou l'autre des positions correspondant aux deux états stables du flotteur (9).

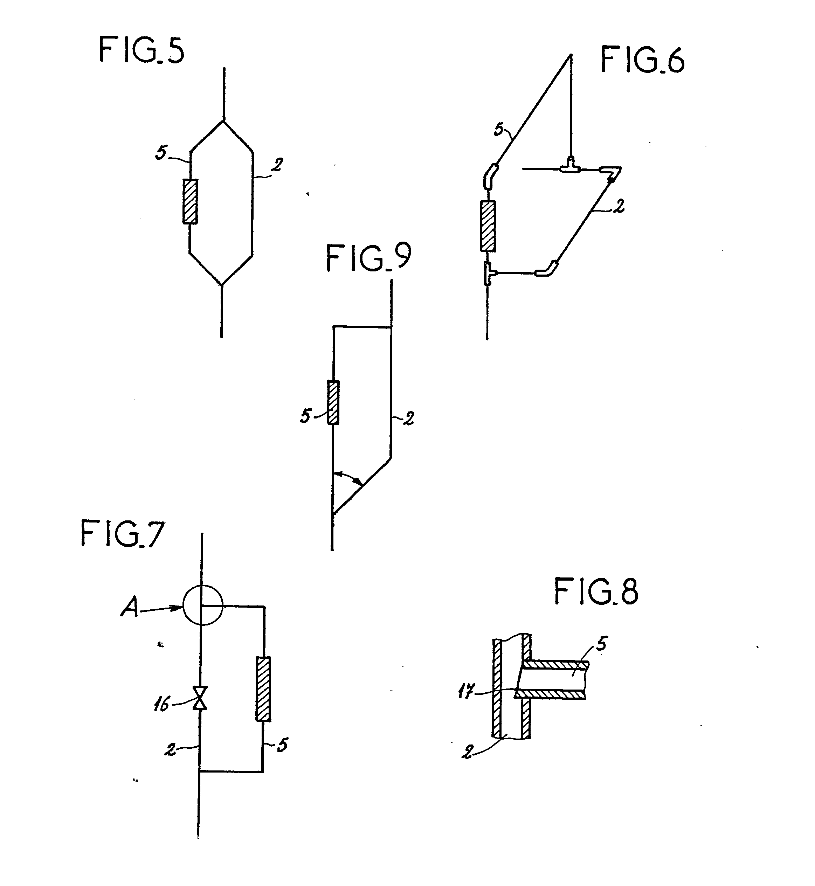

Les figures 5 à 7 représentent trois variantes de réalisation de ce dispositif, étant précisé que les formes et agencements respectifs des circuits principal et secondaire pourraient se présenter sous de nombreuses autres formes.

Dans la forme d'exécution représentée à la figure 5, le circuit principal (2) et le circuit secondaire (5) sont disposés dans un même plan et occupent des positions symétriques délimitant un hexagone.

Dans la forme d'exécution représentée à la figure 6, le circuit principal (2) et le circuit secondaire (5) sont constitués par deux réseaux en C disposés dans des plans formant un angle de 90° l'un avec l'autre.

Dans la forme d'exécution représentée à la figure 7, le circuit principal (2) est droit, tandis que le circuit secondaire (5), disposé dans le même plan, est en forme de C. Le réglage du seuil de déclenchement peut être effectué à l'aide d'une vanne (16) montée sur le circuit principal (2), et la différence de pression permettant le déplacement du flotteur (9) peut être obtenue, comme montré à la figure 8, en faisant déborder très légèrement en (17) l'extrémité aval du conduit secondaire à l'intérieur du conduit principal, ce qui permet de créer une différence de pression de part et d'autre du flotteur.

Dans la forme d'exécution représentée à la figure 9, le conduit principal comporte deux branches formant un angle obtu, la branche disposée en amont formant avec la tubulure (3) d'amenée de fluide un angle ($\alpha$) aigu, ce qui présente l'avantage de réduire les pertes de charge.

Comme il ressort de ce qui précède, l'invention apporte une grande amélioration à la technique existante en fournissant un détecteur de structure simple, ne nécessitant pas de diminution de section du circuit principal, fonctionnant avec des seuils d'ouverture et de fermeture du circuit secondaire très proches l'un de l'autre, assurant une coupure de la circulation de fluide dans le circuit secondaire en conditions normales de fonctionnement, ce qui évite tout risque de coincement du flotteur par des impuretés, permettant une multitude de formes de réalisation avec des entrées et sorties dans des plans horizontaux ou verticaux, et en comportant un nombre réduit de pièces ne s'usant pas, ce qui procure une grande fiabilité à l'ensemble.

7
## REVENDICATIONS

1. - Détecteur de circulation d'un fluide, du type comprenant un circuit principal (2) de circulation du fluide, et un circuit secondaire (5) en dérivation à l'intérieur duquel est monté un flotteur (9) déplaçable dans la direction d'écoulement du fluide, caractérisé en ce que le flotteur (9) est monté libre en translation entre deux positions extrêmes stables correspondant, d'une part, à l'absence de circulation ou à une circulation insuffisante de fluide et, d'autre part, à un écoulement normal du fluide, un indicateur (13) étant prévu qui détecte la présence du flotteur (9) dans l'une de ses positions extrêmes.

2. - Détecteur selon la revendication 1, caractérisé en ce que le flotteur (9) est monté sans frottement dans le circuit secondaire (5).

3. - Détecteur selon l'une quelconque des revendications 1 et 2, caractérisé en ce que, lorsqu'il est dans sa position stable correspondant à une circulation normale du fluide, le flotteur (9) obture totalement le circuit secondaire (5).

4. - Détecteur selon l'une quelconque des revendications 1 à 3, caractérisé en ce que le tronçon (6) de circuit secondaire (5), à l'intérieur duquel le flotteur (9) est déplaçable, est vertical et en ce que le flotteur (9) passe de sa position stable en conditions normales de circulation du fluide à sa position stable en conditions de circulation insuffisante du fluide, sous l'effet de la gravité.

5. - Détecteur selon l'une quelconque des revendications 1 à 3, caractérisé en ce que le flotteur (9) est déplaçable entre sa position stable en conditions normales de circulation du fluide et sa position stable en conditions de circulation insuffisante du fluide, sous l'action de moyens élastiques de rappel.

6. - Détecteur selon la revendication 5, caractérisé en ce que les moyens élastiques de rappel sont constitués par un ressort disposé en aval du flotteur (9), dans le sens d'écoulement du fluide.

7. - Détecteur selon l'une quelconque des revendications 1 à 6, caractérisé en ce que l'indicateur de position du flotteur (9) est constitué en combinaison par la nature même d'un matériau (12) constitutif du flotteur (9), qui est aimanté et par un détecteur (13) disposé à l'extérieur du circuit secondaire (5), réagissant aux variations de champ magnétique.

8

8. - Détecteur selon l'une quelconque des revendications 1 à 7, caractérisé en ce qu'il comporte une vanne (16) de réglage du débit située sur le circuit principal (2).

FIG.1

FIG.2

FIG.3

FIG.4

FIG.5

FIG.6

FIG.9

FIG.7

FIG.8

Office européen
des brevets

**RAPPORT DE RECHERCHE EUROPEENNE**

## DOCUMENTS CONSIDERES COMME PERTINENTS

| Catégorie | Citation du document avec indication. en cas de besoin. des parties pertinentes | Revendication concernee | CLASSEMENT DE LA DEMANDE (Int Cl 4) |
|---|---|---|---|
| X,D | DE-B-1 252 299  (DR. STIEBEL WERKE) <br> * Colonne 3, ligne 8 - colonne 4, ligne 12; figures * | 1,2,7 | G 01 P  13/00 |
| | --- | | |
| A | US-A-3 549 839  (HILL et al.) <br> *  Colonne  1,  lignes  45-59; colonne 3, lignes 15-17; figure 2 * | 2,4,7 | |
| | ----- | | |

DOMAINES TECHNIQUES
RECHERCHES (Int. Cl.4)

G 01 P
G 05 D
H 01 H

Le présent rapport de recherche a été établi pour toutes les revendications

| Lieu de la recherche <br> LA HAYE | Date d'achèvement de la recherche <br> 09-10-1985 | Examinateur <br> HANSEN P. |
|---|---|---|

OEB Form 1503 03 82

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant